# EUROPÄISCHE PATENTANMELDUNG

(11) **EP 2 591 991 A2**
(43) Veröffentlichungstag der Anmeldung: **15.05.2013**
(21) Anmeldenummer: 12192041.7
(22) Anmeldetag: 09.11.2012
(51) Int. Cl.: B62K 25/02

(54) **Befestigungssystem eines Laufrads für ein Fahrrad**

(30) Priorität: 11.11.2011 DE 102011086180
(71) Anmelder: Klieber, Jochen, 83342 Tacherting (DE)
(72) Erfinder: Klieber, Jochen, 83342 Tacherting (DE)
(74) Vertreter: Maiwald Patentanwalts GmbH

(57) **Zusammenfassung**

Die vorliegende Erfindung betrifft ein Befestigungssystem zur lösbaren Befestigung eines Laufrads für ein Fahrrad. Um einen schnelleren Ein- und Ausbau eines Laufrads zu ermöglichen, wird ein Befestigungssystem (40) zur lösbaren Befestigung eines Laufrads für ein Fahrrad vorgesehen. Das Befestigungssystem weist einen Achskörper (42) und eine Werkzeughalterung (44) auf. Der Achskörper ist zur Aufnahme einer Nabe eines Laufrads ausgebildet und weist ein erstes (46) und ein zweites Ende (48) auf zur Befestigung in Haltevorrichtungen eines Fahrradrahmens. Der Achskörper weist an dem zweiten Ende ein Außengewinde (50) auf zum Einschrauben in eine Aufnahmeöffnung eines Rahmenelements mit einem dazu passenden Innengewinde. Der Achskörper weist an dem ersten Ende eine Ansatzvorrichtung (52) zum Ansetzen eines Werkzeugs auf, um den Achskörper mit dem Außengewinde zur lösbaren Befestigung des Laufrads einschrauben zu können. Als Werkzeughalterung ist in dem Achskörper ein sich axial erstreckender Hohlraum (54) vorgesehen, in dem ein Werkzeug zum Befestigen und Lösen des Achskörpers mindestens teilweise aufgenommen werden kann.

## Beschreibung

Die vorliegende Erfindung betrifft ein Befestigungssystem zur lösbaren Befestigung eines Laufrads für ein Fahrrad, ein Laufrad für ein Fahrrad, sowie ein Fahrrad.

Zur lösbaren Befestigung eines Laufrads werden bei Fahrrädern beispielsweise Schnellspannsysteme verwendet, bei denen die für das Halten eines Laufrads, beziehungsweise für das Halten einer Laufradachse, erforderlichen Klemmkräfte durch Umlegen eines Schnellspannhebels bewirkt werden. Es hat sich jedoch gezeigt, dass insbesondere im Mountainbike-Bereich durch Verwendung von Laufradachsen, die zum Halten im Rahmen verschraubt werden, bessere Haltekräfte, und insbesondere eine verbesserte Steifigkeit des Rahmens, beziehungsweise der Gabel erreicht werden können. Die Einschraubkraft wird mittels eines Werkzeugs aufgebracht. Es hat sich jedoch gezeigt, dass z.B. bei Amateur- oder Profirennen ein Reifenwechsel während des Rennens erforderlich sein kann, so dass ein möglichst schneller Ein- und Ausbau des entsprechenden Laufrads wünschenswert ist. Ein Nachteil der bekannten Lösungen besteht beispielsweise darin, dass das erforderliche Werkzeug zum Lösen beziehungsweise Festschrauben der Achse zunächst z.B. in einem mitgeführten Rucksack gefunden und herausgenommen werden muss.

Eine Aufgabe der vorliegenden Erfindung besteht daher darin, ein Befestigungssystem zur Verfügung zu stellen, das einen schnelleren Ein- und Ausbau eines Laufrads ermöglicht, bei möglichst großer Steifigkeit der Verbindung.

Diese Aufgabe wird durch ein Befestigungssystem zur lösbaren Befestigung eines Laufrads für ein Fahrrad, durch ein Laufrad für ein Fahrrad, sowie durch ein Fahrrad nach einem der unabhängigen Ansprüche erreicht. Beispielhafte Ausführungsformen sind in den abhängigen Ansprüchen dargestellt.

Gemäß einem ersten Aspekt der Erfindung ist ein Befestigungssystem zur lösbaren Befestigung eines Laufrads für ein Fahrrad vorgesehen, wobei das Befestigungssystem einen Achskörper und eine Werkzeughalterung aufweist. Der Achskörper ist zur Aufnahme einer Nabe eines Laufrads ausgebildet und weist ein erstes und ein zweites Ende auf zur Befestigung in Haltevorrichtungen eines Fahrradrahmens. Der Achskörper weist an dem zweiten Ende ein Außengewinde auf zum Einschrauben in eine Aufnahmeöffnung eines Rahmenelements mit einem dazu passenden Innengewinde. Der Achskörper weist an dem ersten Ende eine Ansatzvorrichtung zum Ansetzen eines Werkzeugs auf, um den Achskörper mit dem Außengewinde zur lösbaren Befestigung des Laufrads einschrauben zu können. Als Werkzeughalterung ist in dem Achskörper ein sich axial erstreckender Hohlraum vorgesehen, in dem ein Werkzeug zum Befestigen und Lösen des Achskörpers mindestens teilweise aufnehmbar ist.

Das Vorsehen einer mit dem Achskörper integral ausgebildeten Werkzeughalterung bietet den Vorteil, dass das Werkzeug in unmittelbarer Nähe seines primären Einsatzzwecks untergebracht werden kann. Dadurch entfällt die Suche nach einem Werkzeug, und darüber hinaus wird gewährleistet, dass stets ein Werkzeug zum Lösen des Laufrads zur Hand ist. Gleichzeitig wird ein möglichst guter Halt des Achskörpers dadurch gewährleistet, dass der Achskörper in einen Fahrradrahmen, beziehungsweise in die dafür vorgesehenen Aufnahmevorrichtungen, eingeschraubt werden kann.

Gemäß einer beispielhaften Ausführungsform der Erfindung ist eine Werkzeughaltevorrichtung vorgesehen zum verliersicheren Halten des Werkzeugs in aufgenommenem Zustand.

Beispielsweise kann die Werkzeughaltevorrichtung an dem Achskörper selbst ausgebildet sein. Gemäß einem weiteren Ausführungsbeispiel ist die Werkzeughaltevorrichtung an einem Rahmensegment in unmittelbarer Nähe der Aufnahmeöffnungen für den Achskörper an dem Fahrradrahmen vorgesehen.

Gemäß einem Ausführungsbeispiel ist der Achskörper als Steckachse zur Befestigung eines Rades ausgebildet.

Beispielsweise weist der Achskörper bei einer Steckachse zwischen dem ersten Ende und dem zweiten Ende einen Achsabschnitt auf, der sich im eingebauten Zustand der Steckachse zwischen einem ersten Ausfallende und einem zweiten Ausfallende eines Rahmens oder einer Gabel erstreckt, und welcher der Aufnahme der Nabe dient. An dem ersten Ende des Achskörpers ist eine radial vorspringende Schulter angeordnet, durch welche im eingebauten Zustand eine parallel zur Richtung der Mittelachse des Achsabschnitts wirkende Kraft übertragen wird, wobei die Schulter im eingebauten Zustand an einer hierzu korrespondierenden Anlagefläche anliegt, die am ersten Ausfallende angeordnet ist.

Zwischen der Schulter und der Anlagefläche am Ausfallende können beispielsweise konusförmige Kraftübertragungselemente vorgesehen werden, die beispielsweise auch geschlitzt, zumindest teilweise geschlitzt, ausgebildet sein können.

Das Werkzeug kann beispielsweise in den Hohlraum von der Seite des ersten Endes her einsetzbar sein, d.h. eingesetzt werden. Das Werkzeug kann alternativ auch von der Seite des zweiten Endes her eingesetzt werden. Beispielsweise können auch beide Varianten gemeinsam vorgesehen sein.

Der Achskörper ist beispielsweise an dem ersten Ende mit einem in axialer Richtung abstehenden Kragen ausgebildet, in den ein zu haltendes Werkzeug mit einem Klemmeinsatz einsetzbar ist.

Der Kragen kann auf der Innenseite einen in einer Nut eingelegten O-Ring aufweisen, zum Halten des Klemmeinsatzes.

Der Achskörper kann an demjenigen Ende, an dem keine Werkzeughalterung ausgebildet ist, eine stirnseitige Abdeckung des innenliegenden Hohlraums aufweisen.

Gemäß einem weiteren Ausführungsbeispiel ist ein Werkzeug vorgesehen, das zum Ein- und Ausschrauben des Achskörpers aus der Werkzeughalterung vollständig herausnehmbar ist.

Gemäß einer weiteren Ausführungsform ist das Werkzeug in die Haltevorrichtung wenigstens teilweise eingesetzt, wobei das Werkzeug eine primäre Werkzeugspitze aufweist, die zur kraftschlüssigen Verbindung mit der Ansatzvorrichtung des Achskörpers ausgebildet ist. Das Werkzeug weist eine Hebelarmvorrichtung auf zum Ausüben eines Drehmoments auf den Achskörper. Das Werkzeug ist in der Haltevorrichtung herausnehmbar gehalten.

Gemäß einem weiteren Ausführungsbeispiel ist das Werkzeug für die Hebelarmvorrichtung L-förmig mit einem ersten und einem zweiten Schenkel ausgebildet und ist mit einem der beiden Schenkel in die Haltevorrichtung eingesteckt. Das Werkzeug ist an einem Übergang von dem ersten zu dem zweiten Schenkel mit einer multifunktionalen Griffvorrichtung ausgebildet, mit der das Werkzeug in die Haltevorrichtung eingesetzt und aus der Haltevorrichtung entnommen werden kann.

Beispielsweise dichtet die multifunktionale Griffvorrichtung bei gehaltenem Werkzeug, d.h. bei eingesetztem Werkzeug in die Werkzeughalterung, die Ansatzvorrichtung gegenüber Verschmutzung ab.

Die multifunktionale Griffvorrichtung ist beispielsweise mit einem Klemmeinsatz ausgebildet, der in einen an dem ersten Ende des Achskörpers in axialer Richtung abstehenden Kragen eingesetzt werden kann, um das Werkzeug zu halten.

Der Klemmeinsatz weist eine sich zum eingesetzten Ende hin zunehmende Querschnittsform auf, um das Werkzeug in Richtung des Achskörpers zu drängen, was einen sicheren Halt bedeutet.

Der Klemmeinsatz dichtet bei gehaltenem Werkzeug die Aufnahmeöffnung und den Achskörper stirnseitig ab gegen Verschmutzung.

Die multifunktionale Griffvorrichtung ist beispielsweise mit einem Anschlag ausgebildet, zum Ansetzen des Werkzeugs an dem Achskörper, bzw. in die Werkzeugaufnahmevorrichtung an der Achse.

Die multifunktionale Griffvorrichtung weist beispielsweise zwei einander gegenüberliegende Griffvorrichtungen auf. Beispielsweise ist an wenigstens einer Seite ein erster Griffvorsprung ausgebildet und ein gegenüberliegender zweiter Griffvorsprung wird durch einen der beiden Hebelarme ausgebildet.

Gemäß einem weiteren Ausführungsbeispiel ist die multifunktionale Griffvorrichtung mit einem Klemmeinsatz ausgebildet, der in eine Ausnehmung am Achskörper einsetzbar ist. Der Klemmeinsatz dichtet die Aufnahmeöffnung und den Achskörper stirnseitig gegen Verschmutzung ab und weist außerdem einen Anschlag auf, zum Ansetzen des Werkzeugs an der Ansatzvorrichtung des Achskörpers. Die multifunktionale Griffvorrichtung weist ferner zwei gegenüberliegende Griffvorrichtungen auf, wobei einer der Griffvorsprünge durch einen der beiden Hebelarme ausgebildet ist.

Das Werkzeug kann an dem Ende des ersten Schenkels mit einer ersten Werkzeugspitze ausgebildet sein und an dem Ende des zweiten Schenkels mit einer zweiten Werkzeugspitze, wobei die erste Werkzeugspitze als die primäre Werkzeugspitze ausgebildet ist und sich von der zweiten Werkzeugspitze unterscheidet.

Gemäß einer weiteren Ausführungsform weist die Ansatzvorrichtung des Achskörpers eine durchgehende Einstecköffnung zur Aufnahme der primären Werkzeugspitze auf, wobei die primäre Werkzeugspitze in aufgenommenen Zustand mit der Ansatzvorrichtung in Eingriff steht. Das Werkzeug ist zum Halten mit dem zweiten Schenkel in die Einstecköffnung gesteckt.

Der Zustand, bzw. die Position oder Stellung, in der die primäre Werkzeugspitze in der Ansatzvorrichtung aufgenommenen ist mit dieser in Eingriff steht, wird auch als Arbeitsposition bezeichnet. Die Position oder Stellung, in der das Werkzeug zum Halten mit dem zweiten Schenkel in die Einstecköffnung gesteckt ist, wird auch als Halteposition bezeichnet.

Der zweite Schenkel kann beispielsweise einen Querschnitt aufweisen, der zum Öffnungsquerschnitt der Ansatzvorrichtung passt, z.B. kann der zweite Schenkel auch als Außensechskant ausgebildet sein. Die zweite Werkzeugspitze kann ebenfalls als Außensechskant ausgebildet sein, z.B. ebenfalls passend zur Ansatzvorrichtung oder in einer anderen Größe für andere Schraubverbindungen am Fahrrad.

Der zweite Schenkel kann auch einen anderen Querschnitt aufweisen, z.B. rund, oder mit längsverlaufenden Vorsprüngen. Bei einer runden Form, oder einer Form, die in ihrem Umfangskreis kleiner als der lichte Innenkreis der Ansatzvorrichtung ist, lässt sich das Werkzeug in aufgenommenem Zustand verdrehen. Bei Profilen, d.h. Öffnungsprofil der Ansatzvorrichtung und Querschnittsprofil des zweiten Schenkels, ist das Werkzeug in aufgenommenem Zustand nicht mehr verdrehen, es sei denn, dass der Bereich des zweiten Schenkels, der sich im eingesteckten Zustand in der Öffnung der Ansatzvorrichtung befindet, mit einer kleineren Querschnittsform (siehe zuvor) ausgebildet ist.

Die primäre Werkzeugspitze kann auch in einer Form eines anderen Verbindungs-, beziehungsweise Steckverbindersystems ausgebildet sein, beispielsweise als Torx. Die Ansatzvorrichtung des Achskörpers ist dann dazu passend ausgebildet.

Das Werkzeug kann an dem eingesteckten Hebelarm im Bereich der Einstecköffnung eine Umfangsform aufweisen, die derart kleiner als die Einstecköffnung ist, dass der eingesteckte Hebelarm drehbar gehalten ist.

Das Werkzeug kann an dem eingesteckten Hebelarm im Bereich der Einstecköffnung eine Umfangskontur mit einer Vielzahl von Vorsprüngen aufweisen, wobei die Vielzahl ein Mehrfaches der Vorsprünge der Einstecköffnung beträgt. Der eingesteckte Hebelarm weist eine Vielzahl von dazu passenden Vorsprüngen auf, wobei das Werkzeug in seiner axialen Winkellage feiner einstellbar ist im Vergleich zur Einstellbarkeit mittels der Vorsprünge der Einstecköffnung. Das Werkzeug kann an dem eingesteckten Hebelarm in einem Bereich, der an den Bereich der Einstecköffnung anschließt, eine Umfangsform aufweisen, die derart kleiner als die Einstecköffnung ist, dass der eingesteckte Hebelarm drehbar gehalten ist.

Gemäß einer weiteren Ausführungsform umfasst das Befestigungssystem eine erste und eine zweite Aufnahme am Ausfallende und/oder Gabelende für die Aufnahme des Achskörpers eines Laufrads. An einem Rahmensegment in der Nähe einer der beiden Aufnahmen kann eine zusätzliche Werkzeughaltevorrichtung vorgesehen sein.

Das Befestigungssystem kann für ein Vorderrad und/oder eine Hinterrad vorgesehen sein. Beispielsweise kann das Befestigungssystem für das Vorderrad und das Hinterrad an einem Fahrrad vorgesehen sein, wobei eine der beiden Werkzeughalterungen, d.h. der Hohlraum an dem Achskörper des Vorderrads oder der Hohlraum an dem Achskörper des Hinterrads, mit einer lösbaren Abdeckung verschlossen sein kann als Schutz gegen Verschmutzung. Das in der anderen Werkzeughalterung lösbar gehaltene Werkzeug kann zum Befestigen und Lösen für beide Räder verwendet werden.

Als zusätzliche Werkzeughaltevorrichtung kann eine Schelle zur Aufnahme eines Teils des Werkzeugs vorgesehen sein.

In dem Rahmenelement kann als zusätzliche Werkzeughaltevorrichtung eine Ausnehmung zur Aufnahme eines Vorsprungs vorgesehen sein, der an dem Werkzeug ausgebildet ist.

Die erste Aufnahme des Ausfallendes und/oder Gabelendes kann zum Einsetzen und teilweise Hindurchführen des Achskörpers ausgebildet sein, und die zweite Aufnahme kann mit einem Innengewinde zum Einschrauben des Achskörpers ausgebildet sein.

An dem Rahmenelement kann im Bereich der ersten oder zweiten Aufnahme eine Ausnehmung zum Einsetzen eines Klemmeinsatzes des Werkzeugs vorgesehen sein.

An dem Rahmenelement kann im Bereich der ersten oder zweiten Aufnahme ein in axialer Richtung der Achse abstehender Kragen ausgebildet sein, in den ein zu haltendes Werkzeug mit dem Klemmeinsatz einsetzbar ist.

Gemäß einem zweiten Aspekt der Erfindung ist ein Laufrad für ein Fahrrad vorgesehen, das eine Felge, eine Vielzahl von Speichen, eine Nabe und einen Achskörper aufweist. Die Felge ist mit den Speichen an der Nabe gehalten, und die Nabe ist auf dem Achskörper aufgenommen. Gemäß der Erfindung ist ein Befestigungssystem nach einem der vorhergehend beschriebenen Befestigungssysteme vorgesehen.

Gemäß einem dritten Aspekt der vorliegenden Erfindung ist ein Fahrrad mit einem Rahmen, einer Gabel und zwei Laufrädern vorgesehen, wobei wenigstens eines der Laufräder als ein Laufrad wie vorhergehend beschrieben ausgebildet ist.

Gemäß einem Aspekt der Erfindung ist vorgesehen, das Werkzeug zum Lösen und Befestigen der Achse, die in ein Gewinde am Ausfallende, beziehungsweise Gabelende eingeschraubt wird, in unmittelbarer Nähe aufzubewahren, um einen jederzeit möglichen Zugriff auf das Werkzeug zu gewährleisten. Dazu wird in dem Achskörper ein Hohlraum ausgebildet, in den das Werkzeug zumindest teilweise eingesteckt werden kann. Der Achskörper kann dabei weiterhin mit einem normalen Werkzeug, das mit dem passenden Steckverbindungssystem zur Übertragung der Betätigung zum Lösen und Befestigen des Achskörpers ausgebildet ist, ein- und ausgeschraubt werden.

Das eingesteckte Werkzeug weist vorzugsweise einen Hebelarm zum Aufbringen der erforderlichen Haltekraft auf und verfügt beispielsweise über eine Griffvorrichtung, die gleichzeitig mehrere Funktionen erfüllt, z.B. das sichere Halten, das insbesondere auch stärkere Erschütterungen, die zum Beispiel im Mountainbike-Bereich auftreten können, überstehen kann. Zusätzlich ist ein Anschlag ausgebildet, der dazu dient, das Werkzeug in die entsprechende Öffnung, beziehungsweise Ansatzvorrichtung des Achskörpers einzusetzen und dabei einen Eingriff des Werkzeugs mit der Ansatzvorrichtung derart zu gewährleisten, dass eine sichere Kraftübertragung möglich ist. Dadurch wird ein möglichst schnelles Ansetzen des Werkzeugs gewährleistet, da der Nutzer nicht erst kontrollieren muss, ob der Schlüssel auch weit genug eingesteckt ist. Gleichzeitig ist der Anschlag so ausgebildet, dass noch genügend Abstand zu angrenzenden Rahmenelementen gewährleistet wird, so dass der Benutzer davor geschützt wird, sich seine Finger zwischen dem Werkzeug und Rahmenelementen einzuklemmen. Die Griffvorrichtung ist außerdem mit zwei gegenüberliegenden Vorsprüngen ausgebildet, an denen das Werkzeug in axialer Richtung herausgezogen werden kann. Bei Ausbildung nur eines Griffs könnte es zur Übertragung eines ungünstigen Hebelmoments führen, so dass sich das Werkzeug in der Achse verklemmen kann.

Es sei darauf hingewiesen, dass die Merkmale der Ausführungsbeispiele auch dort frei miteinander kombiniert werden können, bei denen dies nicht explizit erwähnt ist.

Nachfolgend wird anhand der beigefügten Zeichnungen näher auf Ausführungsbeispiele der Erfindung eingegangen. Es zeigen:
- Fig. 1: ein Fahrrad gemäß einem Ausführungsbeispiel der Erfindung;
- Fig. 2: ein Laufrad gemäß einem Ausführungsbeispiel der Erfindung;
- Fig. 3: ein Befestigungssystem zur lösbaren Befestigung eines Laufrads für ein Fahrrad gemäß einem Ausführungsbeispiel der Erfindung;
- Fig. 4: das Befestigungssystem aus Fig. 3 mit einem eingesteckten Werkzeug;
- Fig. 5: ein weiteres Ausführungsbeispiel eines Befestigungssystems gemäß der Erfindung;
- Fig. 6: das Befestigungssystem aus Fig. 5 mit eingestecktem Werkzeug;
- Fig. 7: ein weiteres Ausführungsbeispiel für ein Befestigungssystem gemäß der Erfindung im Zusammenhang mit zwei Gabelenden;
- Fig. 8: das Befestigungssystem aus Fig. 6 mit dem Werkzeug in Betätigungsposition zum Lösen beziehungsweise Festziehen des Achskörpers;
- Fig. 9: eine weitere perspektivische Darstellung des Befestigungssystems auf Fig. 7;
- Fig. 10: ein weiteres Ausführungsbeispiel eines Befestigungssystems gemäß der Erfindung mit schematisch angedeuteten Ausfallenden;
- Fig. 11: ein Werkzeug eines Befestigungssystems gemäß einem Ausführungsbeispiel der Erfindung;
- Fig. 12: ein weiteres Ausführungsbeispiel eines Befestigungssystems gemäß der Erfindung,
- Fig. 13: ein weiteres Ausführungsbeispiel eines Befestigungssystems gemäß der Erfindung;
- Fig. 14: ein weiteres Ausführungsbeispiel für ein erfindungsgemäßes Werkzeug eines Befestigungssystems; und
- Fig. 15: ein weiteres Ausführungsbeispiel für ein erfindungsgemäßes Werkzeug eines Befestigungssystems.

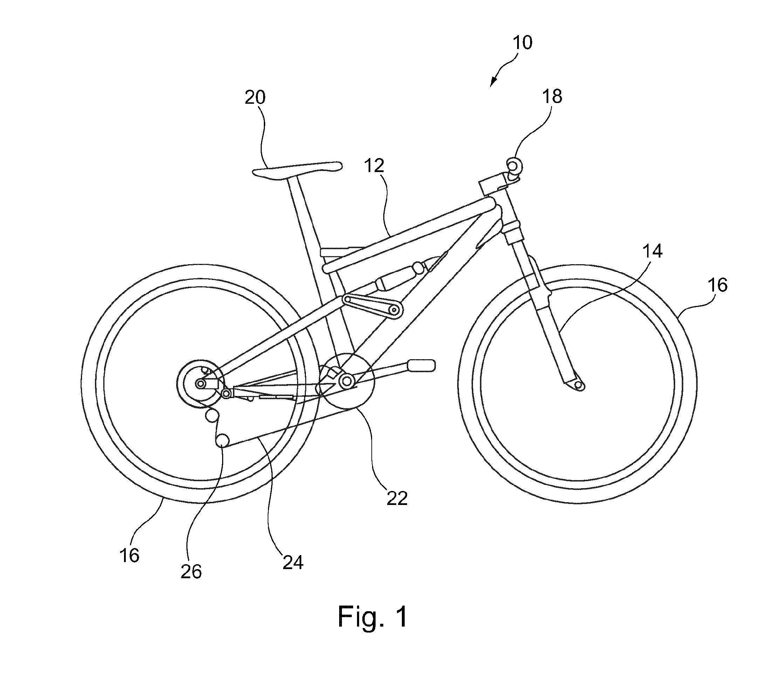

Fig. 1 zeigt ein Fahrrad 10 gemäß der vorliegenden Erfindung, bei dem ein Rahmen 12, eine Gabel 14 und zwei Laufräder 16 schematisch angedeutet sind. Außerdem ist eine Lenkervorrichtung 18 und eine Sattelvorrichtung 20 gezeigt, sowie eine Vorrichtung zum Übertragen der Antriebskraft in Form eines Tretlagers 22, einer Kette 24 sowie eines Schaltwerks 26.

Gemäß der Erfindung ist vorgesehen, dass wenigstens eines der Laufräder 16 mit einem Befestigungssystem zur lösbaren Befestigung eines Laufrads für ein Fahrrad ausgebildet ist, das im Zusammenhang mit den folgenden Figuren näher erläutert wird.

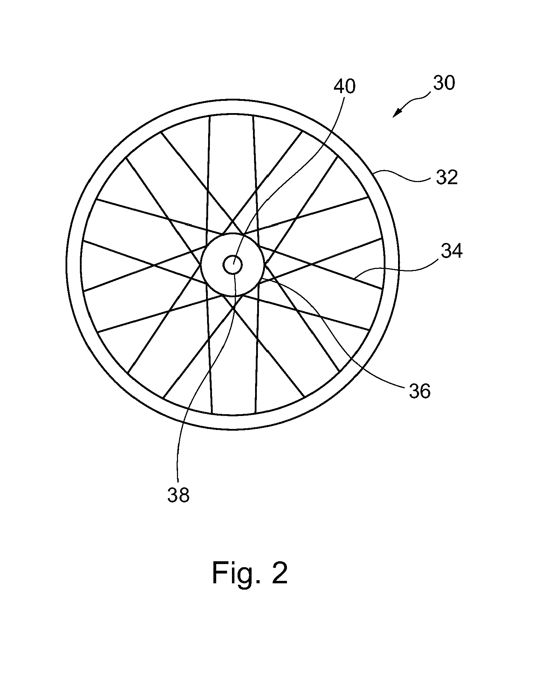

Bevor auf das Befestigungssystem eingegangen wird, soll kurz auf Fig. 2 eingegangen werden. Fig. 2 zeigt ein Laufrad 30 für ein Fahrrad mit einer Felge 32, einer Vielzahl von Speichen 34, einer Nabe 36 und einem Achskörper 38. Die Felge 32 ist mit den Speichen 34 an der Nabe 36 gehalten, und die Nabe ist auf dem Achskörper aufgenommen. Gemäß der Erfindung ist ein Befestigungssystem 40 vorgesehen, das in Fig. 2 nicht näher gezeigt ist, jedoch anhand der folgenden Figuren detailliert in Ausführungsbeispielen beschrieben wird.

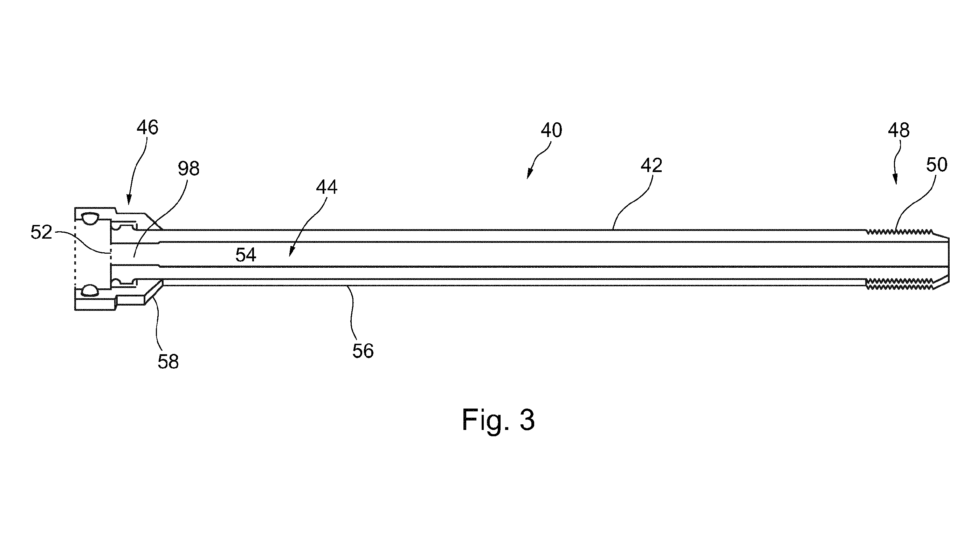

In Fig. 3 ist das Befestigungssystem 40 zur lösbaren Befestigung eines Laufrads für ein Fahrrad in einem Längsschnitt gezeigt. Das Befestigungssystem weist einen Achskörper 42 und eine Werkzeughalterung 44 auf.

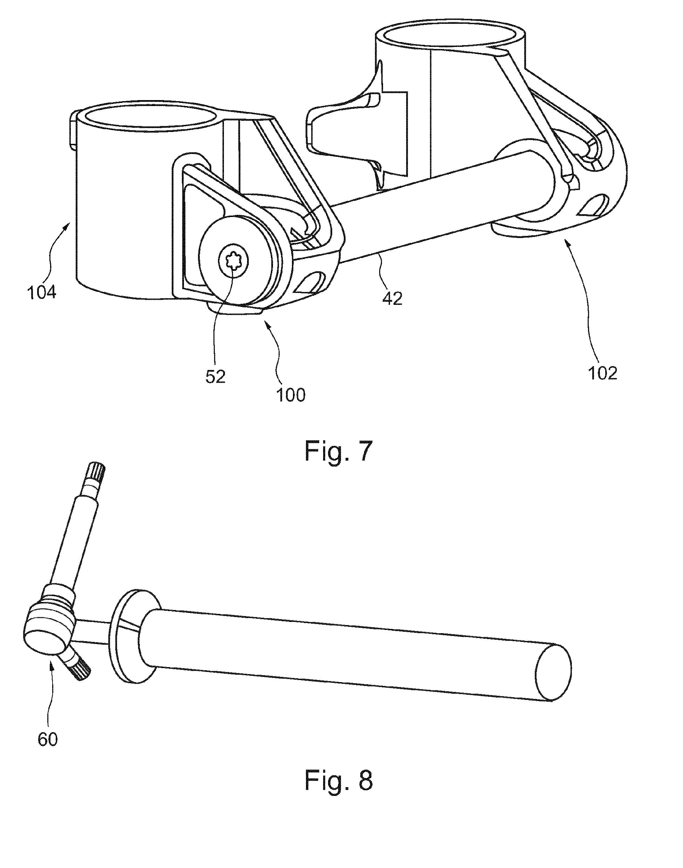

Der Achskörper 42 ist zur Aufnahme einer Nabe eines Laufrads ausgebildet und weist ein erstes Ende 46 und ein zweites Ende 48 auf zur Befestigung in Haltevorrichtungen eines Fahrradrahmens (siehe beispielsweise Fig. 7, 9 und 10). Der Achskörper ist an dem zweiten Ende 48 mit einem Außengewinde 50 ausgebildet, das zum Einschrauben in eine Aufnahmeöffnung eines Rahmenelements mit einem dazu passenden Innengewinde vorgesehen ist.

Der Achskörper 42 weist an dem ersten Ende 46 eine Ansatzvorrichtung 52 zum Ansetzen eines Werkzeugs auf, um den Achskörper mit dem Außengewinde zur lösbaren Befestigung des Laufrads ein- beziehungsweise ausschrauben zu können.

Als Werkzeughalterung 44 ist in dem Achskörper 42 ein sich axial erstreckender Hohlraum 54 vorgesehen, in dem ein Werkzeug zum Befestigen und Lösen des Achskörpers mindestens teilweise aufnehmbar ist.

Der Achskörper ist beispielsweise als Steckachse zur Befestigung eines Rades ausgebildet, beispielsweise für ein Mountainbike.

Dazu weist der Achskörper 42 zwischen dem ersten Ende 46 und dem zweiten Ende 48 einen Achsabschnitt 56 auf, der sich im eingebauten Zustand der Steckachse zwischen einem ersten Ausfallende und einem zweiten Ausfallende eines Rahmens oder einer Gabel erstreckt und der der Aufnahme der Nabe dient. An dem ersten Ende ist eine radial vorspringende Schulter 58 angeordnet, durch welche im eingebauten Zustand eine parallel zur Richtung der Mittelachse des Achsabschnitts 56 wirkende Kraft übertragen wird, wobei die Schulter im eingebauten Zustand an einer hierzu korrespondierenden Anlagefläche anliegt, die an dem ersten Ausfallende des Rahmens angeordnet ist.

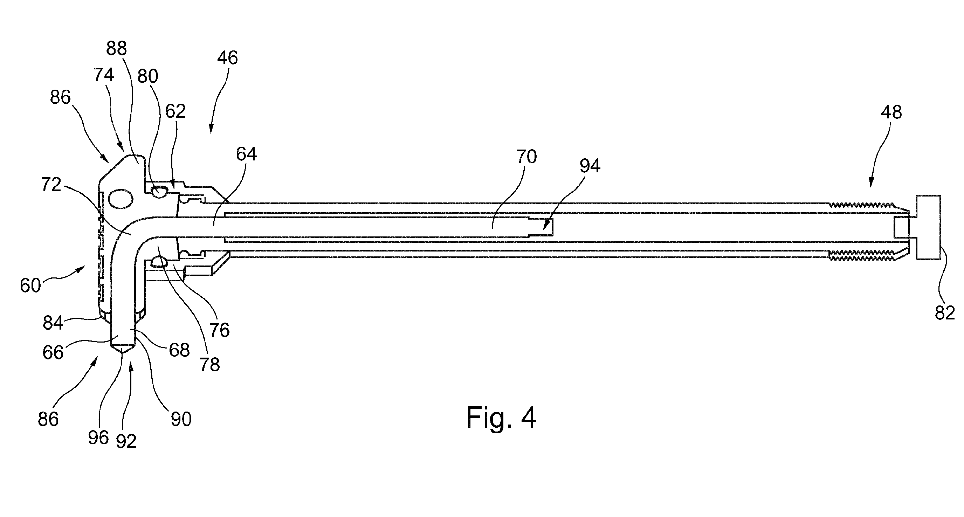

In Fig. 4 ist das Befestigungssystem 40 aus Fig. 3 dargestellt, wobei ein Werkzeug 60 vorgesehen ist, das zum Ein- und Ausschrauben des Achskörpers aus der Werkzeughalterung vollständig herausgenommen werden kann. In Fig. 4 ist das Werkzeug 60 beispielsweise von der Seite des ersten Endes 46 her in den Hohlraum 54 eingesetzt.

Das Befestigungssystem 40 weist eine Werkzeughaltevorrichtung 62 zum verliersicheren Halten des Werkzeugs in aufgenommenem Zustand auf. Beispielsweise ist das Werkzeug 60 mit einer Hebelarmvorrichtung 64 ausgebildet zum Ausüben eines Drehmoments auf den Achskörper. Dazu kann das Werkzeug aus der Haltevorrichtung herausgenommen werden, in der es herausnehmbar aber verliersicher gehalten ist.

Das Werkzeug 60 weist eine primäre Werkzeugspitze 66 auf, die zur kraftschlüssigen Verbindung mit der Ansatzvorrichtung 52 des Achskörpers 42 ausgebildet ist.

Das Werkzeug 60 ist für die Hebelarmvorrichtung 64 mit einem ersten Schenkel 68 und einem zweiten Schenkel 70 ausgebildet und ist mit einem der beiden Schenkel in die Haltevorrichtung eingesteckt.

Das Werkzeug 60 ist an einem Übergang 72 von dem ersten Schenkel 68 zu dem zweiten Schenkel 70 mit einer multifunktionalen Griffvorrichtung 74 ausgebildet, mit der das Werkzeug in die Haltevorrichtung eingesetzt und aus der Haltevorrichtung entnommen werden kann. Bei der Haltevorrichtung 62 handelt es sich beispielsweise um eine stirnseitige Öffnung des Achskörpers.

Der Achskörper 42 weist beispielsweise an dem ersten Ende 46 einen in axialer Richtung abstehenden Kragen 76 auf, in den das zu haltende Werkzeug 60 mit einem Klemmeinsatz 78 eingesetzt werden kann, der an der multifunktionalen Griffvorrichtung 74 ausgebildet ist.

Der Kragen 76 kann auf der Innenseite einen in einer Nut eingelegten O-Ring 80 aufweisen zum Halten und gleichzeitig Abdichten des Klemmeinsatzes.

Der Achskörper kann am zweiten Ende eine stirnseitige Abdeckung 82 des innenliegenden Hohlraums aufweisen.

Die multifunktionale Griffvorrichtung 74 dichtet bei gehaltenem Werkzeug die Ansatzvorrichtung des Achskörpers gegenüber Verschmutzung ab.

Der Klemmeinsatz kann eine sich zum eingesetzten Ende hin zunehmende Querschnittsform 81 aufweisen, um das Werkzeug in Richtung des Achskörpers zu drängen, zum sicheren Halten.

Neben der Abdichtung erfüllt die multifunktionale Griffvorrichtung auch weitere Funktionen. Dazu ist die multifunktionale Griffvorrichtung 74 mit einem Anschlag 84 zum Ansetzen des Werkzeuges 60 an dem Achskörper 42 ausgebildet. Darüber hinaus weist die multifunktionale Griffvorrichtung zwei einander gegenüberliegende Griffvorrichtungen 86 auf. Dazu ist an einer Seite, die dem ersten Hebelarm 68 gegenüberliegt, ein erster Griffvorsprung 88 ausgebildet und der erste Hebelarm 68 dient als gegenüberliegender zweiter Griffvorsprung 90.

Das Werkzeug 60 kann an dem Ende des ersten Schenkels 68 mit einer ersten Werkzeugspitze 92 ausgebildet sein und an dem Ende des zweiten Schenkels mit einer zweiten Werkzeugspitze 94, wobei die erste Werkzeugspitze sich von der zweiten Werkzeugspitze unterscheiden kann.

Das Werkzeug 60 weist eine primäre Werkzeugspitze 96 auf, die zur kraftschlüssigen Verbindung mit der Ansatzvorrichtung des Achskörpers ausgebildet ist. Die primäre Werkzeugspitze 96 kann beispielsweise als Außensechskant ausgebildet sein, wobei die Ansatzvorrichtung 52 des Achskörpers 42 ein dazu passender Innensechskant ist. Die Ansatzvorrichtung kann eine durchgehende Einstecköffnung 98 aufweisen, und das Werkzeug 60 ist mit dem zweiten Schenkel in die Einstecköffnung gesteckt.

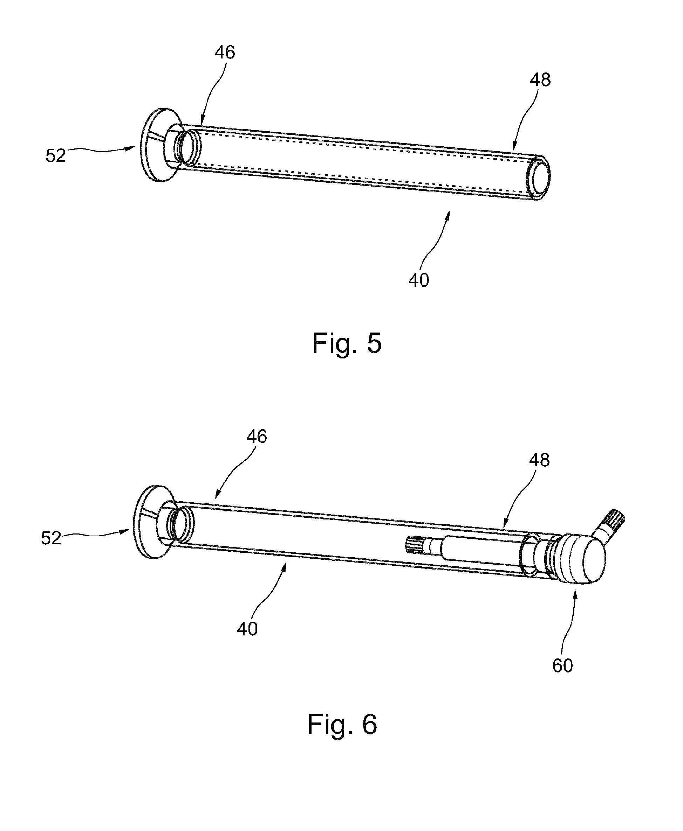

In Fig. 5 ist eine Ausführungsform des Befestigungssystems 40 gezeigt, bei dem das Werkzeug 60 in den Hohlraum von der Seite des zweiten Endes eingesetzt ist.

Beispielsweise kann das Werkzeug an einem oder beiden Werkzeugspitzen als Torx-Verbindung ausgebildet sein, wie dies ebenfalls in Fig. 6 zu erkennen ist, bei der es sich um das Befestigungssystem nach Fig. 5 handelt, mit eingestecktem Werkzeug.

In Fig. 7 ist das Befestigungssystem 40 im Zusammenhang mit einer ersten Aufnahme 100 und einer zweiten Aufnahme 102 an einem Gabelende 104 für die Aufnahme des Achskörpers 42 eines nicht näher dargestellten Laufrads gezeigt. In der perspektivischen Darstellung ist im linken vorderen Bereich die Ansatzvorrichtung 52 gezeigt, die hier als Beispiel mit einem Torx ausgebildet ist. In Fig. 8 ist das Befestigungssystem 40 aus Fig. 6 gezeigt, wobei das Werkzeug 60 mit der primären Werkzeugspitze in die Ansatzvorrichtung 52 eingesetzt ist.

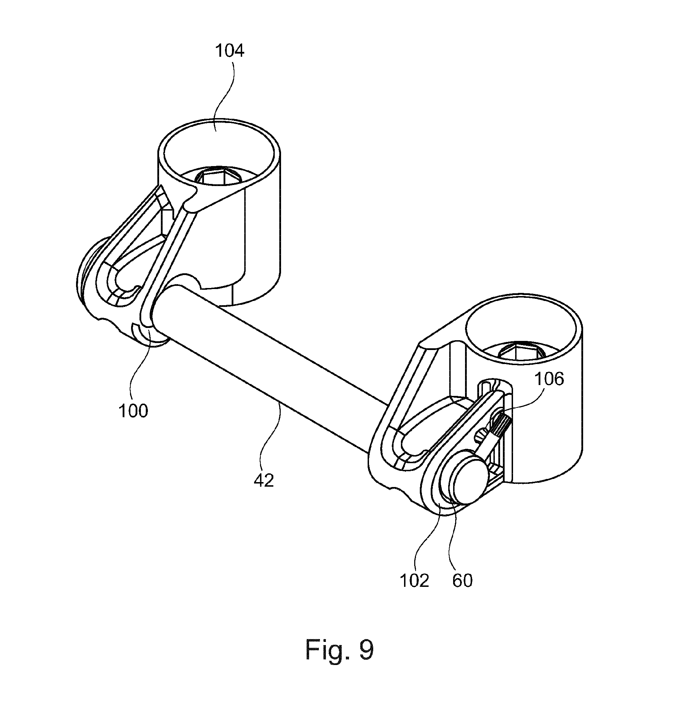

In Fig. 9 ist das Befestigungssystem 40 mit den beiden Gabelenden aus Fig. 7 in einer anderen perspektivischen Ansicht gezeigt.

Wie ebenfalls in Fig. 9 dargestellt ist, kann eine zusätzliche Werkzeughaltevorrichtung 106 an einem Rahmensegment, beispielsweise dem Gabelende mit der zweiten Aufnahme 102, in der Nähe einer der beiden Aufnahmen vorgesehen sein.

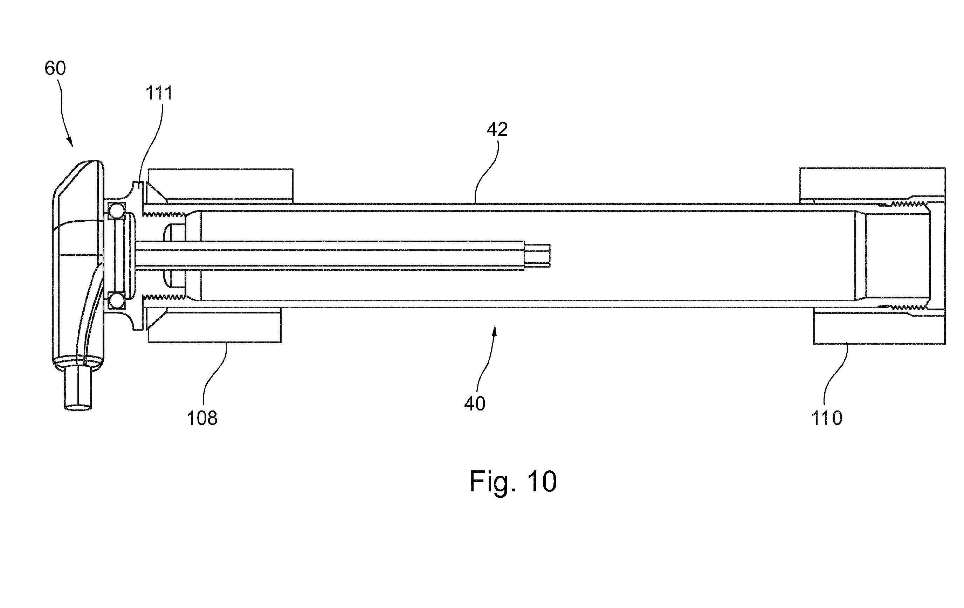

In Fig. 10 ist ein weiteres Ausführungsbeispiel für ein Befestigungssystem 40 gezeigt, wobei das Befestigungssystem 40 mit einer ersten Aufnahme 108 und einer zweiten Aufnahme 110 am Ausfallende eines Rahmens, der nicht näher gezeigt ist, für die Aufnahme des Achskörpers 42 ausgebildet ist. Der Achskörper 42 dient der Aufnahme eines nicht mehr näher gezeigten Laufrads.

In Fig. 10 ist außerdem auch noch gezeigt, dass ein Halteeinsatz 111 vorgesehen sein kann, in den das Werkzeug 60 eingesetzt ist. Der Halteeinsatz 111 ist beispielsweise in das Ausfallende oder in einen an dem Achskörper vorspringenden Kragen eingeschraubt.

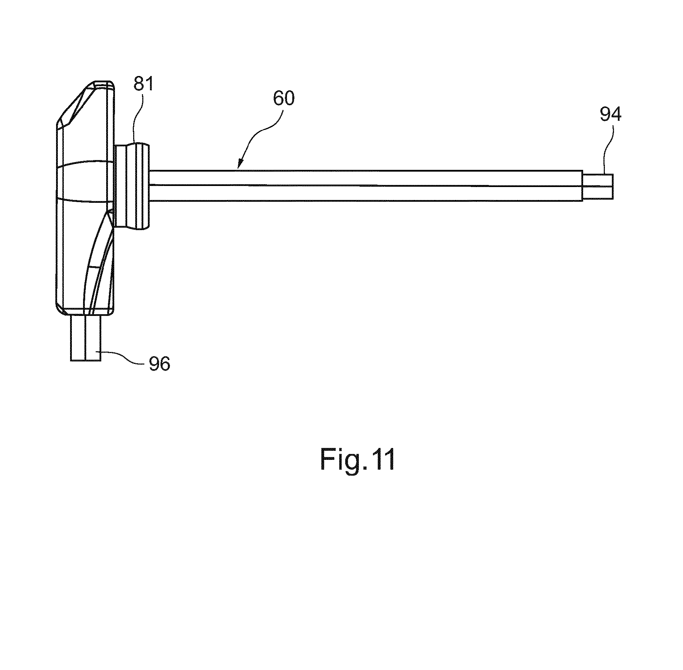

In Fig. 11 ist ein Beispiel für das bereits aus den vorangegangenen Figuren beschriebene Werkzeug 60 dargestellt, bei dem die primäre Werkzeugspitze 96 als ein erster Inbusschlüssel und die zweite Werkzeugspitze 94 als ein weiterer, kleinerer Inbusschlüssel ausgebildet sind.

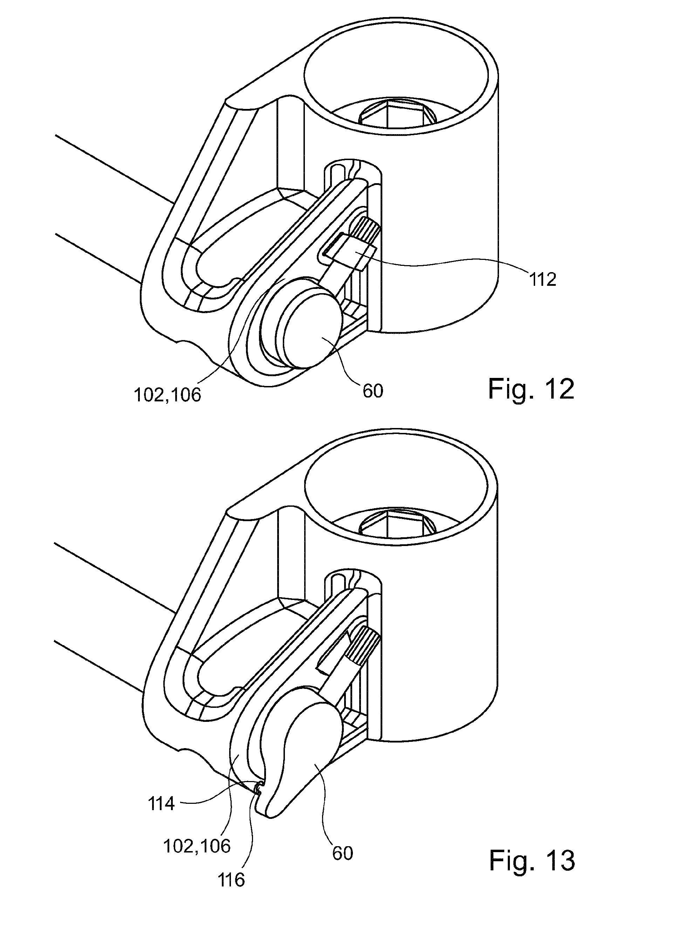

In Fig. 12 ist ein Ausführungsbeispiel für ein Befestigungssystem gezeigt, bei dem als zusätzliche Werkzeughaltevorrichtung 106 eine Schelle 112 zur Aufnahme eines Teils des Werkzeugs vorgesehen ist.

Gemäß dem in Fig. 13 gezeigten Ausführungsbeispiel ist als zusätzliche Werkzeughaltevorrichtung 106 eine Ausnehmung 114 zur Aufnahme eines Vorsprungs 116 vorgesehen, der an dem Werkzeug 60 ausgebildet ist.

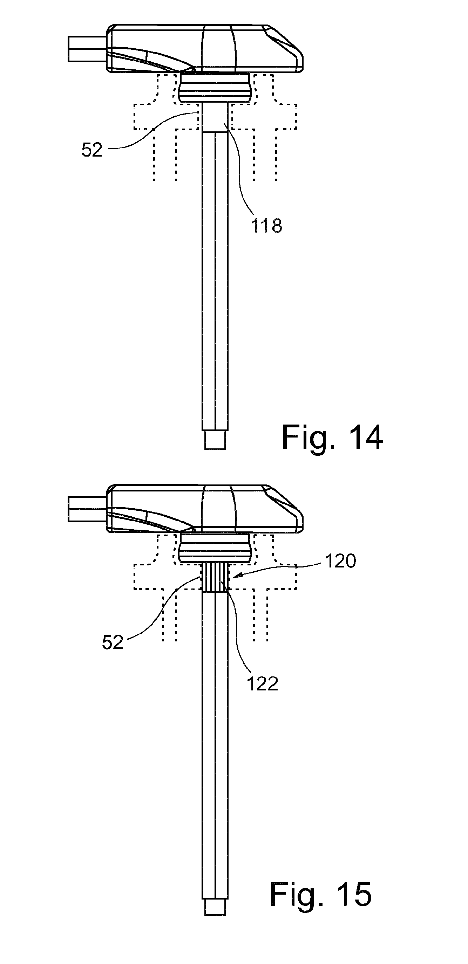

Wie in Fig. 14 dargestellt, kann das Werkzeug 60 an dem eingesteckten Hebelarm im Bereich der Einstecköffnung eine Umfangsform 118 aufweisen, die derart kleiner als die Einstecköffnung ist, dass der eingesteckte Hebelarm drehbar gehalten ist. Dadurch lässt sich beispielsweise die multifunktionale Griffvorrichtung entsprechend der umgebenden Rahmensegmente ausrichten.

Gemäß dem in Fig. 15 gezeigten Ausführungsbeispiel kann das Werkzeug an dem eingesteckten Hebelarm im Bereich der Einstecköffnung eine Umfangskontur 120 mit einer Vielzahl von Vorsprüngen 122 aufweisen, wobei die Vielzahl ein Mehrfaches der Vorsprünge der Einstecköffnung beträgt. Der eingesteckte Hebelarm weist eine Vielzahl von passenden Vorsprüngen auf, wobei das Werkzeug in seiner axialen Winkellage feiner einstellbar ist im Vergleich zur Einstellbarkeit mittels der Vorsprünge der Einstecköffnung.

Zusätzlich kann das Werkzeug an dem eingesteckten Hebelarm in einem Bereich, der an den Bereich der Einstecköffnung anschließt, eine Umfangsform aufweisen, die derart kleiner als die Einstecköffnung ist, dass der eingesteckte Hebelarm drehbar gehalten ist.

Die oberhalb beschriebenen Ausführungsbeispiele können in unterschiedlicher Art und Weise kombiniert werden. Insbesondere können auch Ausführungsbeispiele kombiniert werden, bei denen dies nicht explizit erwähnt ist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale, die mit Verweis auf eines der obigen Ausführungsbeispiele und Aspekte beschrieben worden sind, auch in Kombination mit anderen Merkmalen anderer, oben beschriebener Ausführungsbeispiele und Aspekte verwendet werden können. Bezugszeichen in den Ansprüchen sind nicht als Einschränkung anzusehen.

## Patentansprüche

1. Befestigungssystem (40) zur lösbaren Befestigung eines Laufrads für ein Fahrrad, mit:
- einem Achskörper (42); und
- einer Werkzeughalterung (44);
wobei der Achskörper zur Aufnahme einer Nabe eines Laufrads ausgebildet ist und ein erstes (46) und ein zweites Ende (48) aufweist zur Befestigung in Haltevorrichtungen eines Fahrradrahmens;
wobei der Achskörper an dem zweiten Ende ein Außengewinde (50) aufweist zum Einschrauben in eine Aufnahmeöffnung eines Rahmenelements mit einem dazu passenden Innengewinde;
wobei der Achskörper an dem ersten Ende eine Ansatzvorrichtung (52) zum Ansetzen eines Werkzeugs aufweist, um den Achskörper mit dem Außengewinde zur lösbaren Befestigung des Laufrads einschrauben zu können;
wobei als Werkzeughalterung in dem Achskörper ein sich axial erstreckender Hohlraum (54) vorgesehen ist, in dem ein Werkzeug zum Befestigen und Lösen des Achskörpers mindestens teilweise aufnehmbar ist.

2. Befestigungssystem nach Anspruch 1, wobei eine Werkzeug-Haltevorrichtung (62) vorgesehen ist zum verliersicheren Halten des Werkzeugs in aufgenommenen Zustand.

3. Befestigungssystem nach Anspruch 1 oder 2, wobei der Achskörper als Steckachse zur Befestigung eines Rades ausgebildet ist.

4. Befestigungssystem nach einem der vorhergehenden Ansprüche, wobei ein Werkzeug (60) vorgesehen ist, das zum Ein- und Ausschrauben des Achskörpers aus der Werkzeughalterung vollständig herausnehmbar ist.

5. Befestigungssystem nach Anspruch 4, wobei das Werkzeug in die Haltevorrichtung wenigstens teilweise eingesetzt ist;
wobei das Werkzeug eine primäre Werkzeugspitze (96) aufweist, die zur kraftschlüssigen Verbindung mit der Ansatzvorrichtung des Achskörpers ausgebildet ist;
wobei das Werkzeug eine Hebelarmvorrichtung (64) aufweist zum Ausüben eines Drehmoments auf den Achskörper; und
wobei das Werkzeug in der Haltevorrichtung herausnehmbar gehalten ist.

6. Befestigungssystem nach Anspruch 4 oder 5, wobei das Werkzeug für die Hebelarmvorrichtung L-förmig mit einem ersten (68) und einem zweiten Schenkel (70) ausgebildet ist und mit einem der beiden Schenkel in die Haltevorrichtung eingesteckt ist; und
wobei das Werkzeug an einem Übergang (72) von dem ersten zu dem zweiten Schenkel mit einer multifunktionalen Griffvorrichtung (74) ausgebildet ist, mit der das Werkzeug in die Haltevorrichtung eingesetzt und aus der Haltevorrichtung entnommen werden kann.

7. Befestigungssystem nach Anspruch 6, wobei die multifunktionale Griffvorrichtung mit einem Klemmeinsatz (78) ausgebildet ist, der in eine Ausnehmung einsetzbar ist am Achskörper oder einem Rahmensegment, in das eine Achse einführbar ist;
wobei die Aufnahmeöffnung und der Achskörper stirnseitig gegen Verschmutzung mit dem Klemmeinsatz abdichtbar sind;
wobei der Klemmeinsatz einen Anschlag aufweist, zum Ansetzen des Werkzeugs an der Ansatzvorrichtung des Achskörpers; und
wobei der Klemmeinsatz zwei gegenüberliegende Griffvorrichtungen aufweist.

8. Befestigungssystem nach Anspruch 5, 6 oder 7, wobei die Ansatzvorrichtung des Achskörpers eine durchgehende Einstecköffnung (98) zur Aufnahme der primären Werkzeugspitze aufweist;
wobei die primäre Werkzeugspitze in aufgenommenen Zustand mit der Ansatzvorrichtung in Eingriff steht; und
wobei das Werkzeug zum Halten mit dem zweiten Schenkel in die Einstecköffnung gesteckt ist.

9. Befestigungssystem nach einem der vorhergehenden Ansprüche, wobei das Befestigungssystem eine erste (100; 108) und eine zweite Aufnahme (102; 110) am Ausfallende und/oder Gabelende für die Aufnahme des Achskörpers eines Laufrads umfasst; und
wobei eine zusätzliche Werkzeug-Haltevorrichtung (106) an einem Rahmensegment in der Nähe einer der beiden Aufnahmen vorgesehen ist.

10. Laufrad (30) für ein Fahrrad mit:
- einer Felge (32),
- einer Vielzahl von Speichen (34);
- einer Nabe (36); und
- einem Achskörper (38);
wobei die Felge mit den Speichen an der Nabe gehalten ist, und die Nabe auf dem Achskörper aufgenommen ist; und
wobei ein Befestigungssystem (40) nach einem der vorangegangenen Ansprüche vorgesehen ist.

11. Fahrrad (10) mit einem Rahmen (12), einer Gabel (14) und zwei Laufrädern (16); wobei wenigstens eines der Laufräder als ein Laufrad nach Anspruch 10 ausgebildet ist.
